Europäisches Patentamt

European Patent Office

Office européen des brevets

(19)

(11) Veröffentlichungsnummer : **0 041 169**
**B1**

(12) # EUROPÄISCHE PATENTSCHRIFT

(45) Veröffentlichungstag der Patentschrift :
24.08.83

(51) Int. Cl.³ : **C 05 D 9/00**

(21) Anmeldenummer : **81103786.0**

(22) Anmeldetag : **18.05.81**

(54) **Ionenaustauscher-Düngemittel und Verfahren zur Verbesserung des Pflanzenwachstums.**

(30) Priorität : **29.05.80 DE 3020422**

(43) Veröffentlichungstag der Anmeldung :
**09.12.81 Patentblatt 81/49**

(45) Bekanntmachung des Hinweises auf die Patenterteilung : **24.08.83 Patentblatt 83/34**

(84) Benannte Vertragsstaaten :
**CH DE FR GB IT LI**

(56) Entgegenhaltungen :
**DE A 1 950 678**
**DE A 2 157 971**
**DE A 2 819 871**
**FR A 2 106 278**
**FR A 2 127 022**
**FR A 2 238 690**
**GB A 974 888**
**US A 3 082 074**
**US A 3 373 009**

(73) Patentinhaber : **BAYER AG**
**Zentralbereich Patente, Marken und Lizenzen**
**D-5090 Leverkusen 1, Bayerwerk (DE)**

(72) Erfinder : **Heller, Harold, Dr.**
**Hahnenweg 4**
**D-5000 Koeln 80 (DE)**
Erfinder : **Corte, Herbert, Dr.**
**Am Wasserturm 12**
**D-5090 Leverkusen 3 (DE)**

# 0 041 169

## Ionenaustauscher-Düngemittel und Verfahren zur Verbesserung des Pflanzenwachstums

Die Erfindung betrifft ein Verfahren zur Verbesserung des Pflanzenwachstums durch Verwendung von nährstoffbeladenen schwach basischen und schwachsauren Ionenaustauschern sowie Ionenaustauscher-Düngemittel, die sowohl schwachbasische als auch schwachsaure, mit Nährstoffionen beladene Ionenaustauscher enthalten für die langfristige Versorgung von Pflanzen mit Pflanzennährstoffen.

Düngemittel auf Basis nährstoffbeladener Ionenaustauscher sind bekannt und vielfach beschrieben (vgl. z. B. E. J. Hewitt : Sand and Water Culture method used in the study of plant nutrition, Commonwealth Agricultural Bureaux, Technical Communication N° 22, 2nd Edition, 1966, Seite 61 u. f.). Von besonderem Interesse sind Volldünger auf Ionenaustauscherbasis, die sämtliche für die Pflanzenernährung notwendigen Nährstoffionen auf einem Gemisch aus Anionen- und Kationenaustauschern enthalten. Spezielle Düngemittel dieser Art enthalten starkbasische oder schwachbasische Anionenaustauscher, die teilweise, beispielsweise bis zu 5 %, bezogen auf die Totalkapazität des Anionenaustauschers, mit anionischen Chelatkomplexen von Mikronährstoffkationen beladen sind und bei denen der verbleibende Teil der Austauschkapazität durch andere Makro- und Mikronährstoffanionen abgesättigt ist und starksaure Kationenaustauscher, die mit Nährstoffkationen beladen sind (s. z. B. US-A-3,980,462). Derartige Düngemittel haben sich bei Anwendung unter normalen Bedingungen sehr bewährt (vgl. Zierpflanzenbau 1978, Heft 12, Seiten 476-479 und 1977 Heft 1, Seiten 3-8).

Es hat sich jedoch herausgestellt, daß unter extremen Anwendungsbedingungen die Nährstoffmenge, die von diesen Ionenaustauschern pro Zeiteinheit und Flächeneinheit an die Pflanzen abgegeben wird, zu gering sein kann, um den Nährstoffbedarf der Pflanze sicherzustellen. In derartigen Fällen kann es zu Mangelversorgungen der Pflanze mit Nährstoffen und zu den bekannten Folgeerscheinungen, z. B. Wachstumsdepressionen, kommen.

Extreme Anwendungsbedingungen liegen insbesondere dann vor, wenn bei Verwendung von Gießwässern mit geringem Salzgehalt, z. B. Regenwasser, große Diffusionswege zwischen den Ionenaustauschern und den Pflanzenwurzeln liegen und/oder der Diffusionsquerschnitt stark eingeengt ist. Große Diffusionswege bei gleichzeitiger Einengung des Diffusionsquerschnittes sind z. B. dann gegeben, wenn die Ionenaustauscher in sogenannten Batterien zur Anwendung kommen (vgl. M. Schubert, Mehr Blumenfreude durch Hydrokultur, 6. Auflage, BLV Verlagsgesellschaft, München, 1979, Seiten 94-95).

Da die Verwendung von Batterien jedoch Vorteile mit sich bringt, z. B. die leichte Auswechselbarkeit der Ionenaustauscher nach ihrer Erschöpfung, ist bereits vorgeschlagen worden, durch die Verwendung von Mischungen aus Ionenaustauscherdüngern und Gips in Batterien für eine schnellere Entladung der Ionenaustauscher und damit für eine Verstärkung des Nährstoffstromes zu sorgen (s. DE-A-28 19 871). Diesem Vorschlag liegt die Annahme zugrunde, daß Gips auch in Gegenwart von Ionenaustauschern nur seiner Löslichkeit entsprechend aufgelöst wird und ein reichlicher Gipszusatz daher einen geeigneten Salzvorrat darstellt, der nur langsam in Lösung geht und deshalb geeignet ist, die Freisetzung der Nährstoffe von den Ionenaustauschern über einen langen Zeitraum zu verstärken. Diese Annahme beruht jedoch auf einem Irrtum, denn es ist bekannt, daß schwerlösliche Salze, z. B. Gips, durch Ionenaustauscher rasch vollständig aufgelöst werden (s. F. Helfferich, Ion Exchange, McGraw-Hill Book Comp., New York, 1962, Seiten 226-229 und 295-299), wobei äquivalente Mengen leichtlöslicher Salze in Lösung gehen. Im vorliegenden Falle sind das die auf die Ionenaustauscher aufgeladenen Nährsalze. Es ist daher nicht möglich, durch Gipszusatz eine langsame Freisetzung der Nährstoffe von nährstoffbeladenen Ionenaustauschern zu erreichen. Der Gipszusatz bewirkt vielmehr einen plötzlichen starken Anstieg der Nährstoffkonzentration in der Lösung und eine schnelle, der verwendeten Gipsmenge entsprechende Entladung der Ionenaustauscher. Die angestrebte langsame Abgabe der Nährstoffionen wird durch Gipszusatz nicht erreicht. Darüber hinaus kann es bei salzempfindlichen Pflanzen wie Orchideen, Bromelien, Azaleen, Farnen sowie allgemein Jungpflanzen durch die schnelle Freisetzung der Nährsalze zu Versalzungsschäden kommen (s. F. Penningsfeld et. al. : Hydrokultur und Torfkultur, Seite 40-42, Ulmer Verlag, Stuttgart, 1966).

Es wurde nun gefunden, daß sich eine dem Nährstoffbedarf der Pflanze angepaßte Freisetzung der Nährstoffionen unter extremen Anwendungsbedingungen dadurch erreichen läßt, daß man die mit anionischen Chelatkomplexen von Mikronährstoffkationen und Makro- und Mikronährstoffanionen beladenen schwachbasischen Anionenaustauscher a) zu mindestens 60 %, vorzugsweise zu mindestens 80 %, ihrer Totalkapazität belädt und b) gemeinsam mit schwachsauren, ebenfalls zu mindestens 60 %, vorzugsweise zu mindestens 80 % ihrer Totalkapazität beladenen Kationenaustauschern verwendet.

Durch diese gemeinsame Verwendung hochbeladener schwachbasischer und schwachsaurer mit Nährstoffionen beladener Ionenaustauscher wird erreicht, daß die Freisetzung der Nährsalze nicht mehr mit abnehmendem Salzgehalt des sie umgebenden wäßrigen Mediums abnimmt sondern zunimmt. Das heißt, im Gegensatz zur Verwendung der bekannten Düngemittel auf Ionenaustauscherbasis, z. B. der in der US-A-3,980,462 beschriebenen Düngemittel, werden bei der gemeinsamen Verwendung hochbeladener schwachbasicher und schwachsaurer Ionenaustauscher um so mehr Nährsalze an das sie umgebende wäßrige Medium abgegeben, je niedriger dessen Salzkonzentration ist. Infolge dieser Eigenschaft gewährleistet die gemeinsame Verwendung nährstoffbeladener schwachbasicher und schwachsaurer Ionenaustauscher auch bei Verwendung von Gießwässern mit einem geringen Salzgehalt, bei Verwendung von Behältern mit verengtem Diffusionsquerschnitt oder am Ende der Düngungsperiode, wenn der Salzgehalt der Nährlösung infolge Verbrauchs bereits abgesunken ist, eine ausreichende Versorgung der Pflanzen mit Nährstoffen.

Mischungen von mit Nährstoffionen beladenen schwachbasischen und schwachsauren Ionenaustauschern sind zusammen mit Nährstoffionen beladenen starkbasischen und starksauren Ionenaustauschern als Düngemittel bereits verwendet worden (s. G. Rivoira, Rivista di Agronomia, Bologna 2 (1968), Heft 3/4, Seiten 207 bis 211). Die in diesen Vierkomponentenmischungen verwendeten schwachbasischen Anionenaustauscher und schwachsauren Kationenaustauscher waren jedoch nur zum Teil beladen, etwa zu 20 % ihrer Totalkapazität, wie sich aus der beschriebenen Beladungsmethode ergibt. Diese Mischungen zeigten daher nur die bekannte, mit zunehmendem Salzgehalt des umgebenden wäßrigen Mediums zunehmende Abgabe der Nährstoffionen von den Ionenaustauschern.

In Natur, Vol. 198 (1963), Seiten 1328-1329 wird von Versuchen mit Gemischen nährstoffbeladener schwachsaurer und starkbasischer Ionenaustauscher berichtet. Auch diese Mischungen weisen nur die übliche, mit abnehmendem Salzgehalt des sie umgebenden wäßrigen Mediums abnehmende Abgabe der Nährsalze auf.

Die erfindungsgemäße gemeinsame Verwendung der mit Nährstoffionen hochbeladenen schwachbasischen und schwachsauren Ionenaustauscher kann auf verschiedene Weise erfolgen. So können die Ionenaustauscher einzeln d. h. getrennt von einander eingesetzt werden, oder in Form von Mischungen. Die Verwendung von Mischungen ist bevorzugt.

Die Erfindung betrifft daher ferner Ionenaustauscher-Düngemittel aus Mischungen von mit anionischen Chelatkomplexen von Mikronährstoffkationen und weiteren Mikro- und Makronährstoffanionen beladenen, schwachbasischen Anionenaustauschern und mit Nährstoffkationen beladenen Kationenaustauschern, die dadurch gekennzeichnet sind, daß sie Mischungen aus zu mindestens 60 %, vorzugsweise zu mindestens 80 %, ihrer Totalkapazität mit anionischen Chelatkomplexen von Mikronährstoffkationen und weiteren Mikro- und Makronährstoffanionen beladenen schwachbasischen Anionenaustauschern und zu mindestens 60 %, vorzugsweise zu mindestens 80 %, ihrer Totalkapazität mit Nährstoffkationen beladenen schwachsauren Kationenaustauschern enthalten.

Bei den in dem erfindungsgemäßen Verfahren bzw. in den erfindungsgemäßen Düngemitteln zu verwendenden, mit anionischen Chelatkomplexen von Mikronährstoffkationen und weiteren Makro- und Mikronährstoffanionen beladenen schwachbasischen Anionenaustauschern handelt es sich um Anionenaustauscher, deren Austauschkapazität (= Totalkapazität = Gehalt an schwachbasischen Gruppen) zu 0,25 bis 25 %, vorzugsweise zu 0,5 bis 15 %, durch anionische Chelatkomplexe von Mikronährstoffkationen abgesättigt ist und deren verbleibende Austauschkapazität durch Makro- und andere Mikronährstoffanionen abgesättigt ist.

Das Verhältnis, in dem die hoch beladenen schwachbasichen und schwachsauren Ionenaustauscher in dem erfindungsgemäßen Verfahren bzw. in den erfindungsgemäßen Düngemitteln angewendet werden kann in weiten Grenzen schwanken und richtet sich u. a. nach dem angestrebten pH-Wert im Substrat. Vorzugsweise beträgt die Menge an schwachsauren Gruppen 10 bis 90 %, vorzugsweise 10 bis 50 %, bezogen auf die Summe der schwachbasischen und schwachsauren Gruppen.

Für das erfindungsgemäße Verfahren bzw. die erfindungsgemäßen Düngemittel eignen sich alle schwachbasischen und schwachsauren Kunstharz-Ionenaustauscher. Bei den Ionenaustauschern kann es sich um Polymerisations- oder Kondensationsharze handeln. Ihre Struktur kann gelförmig oder makroporös sein.

Unter schwachbasischen Anionenaustauschern sind die bekannten primäre, sekundäre und tertiäre Aminogruppen aufweisenden Anionenaustauscher, unter schwachsauren Kationenaustauschern die bekannten Carboxyl-, Phosphinsäure-, und phenolische Hydroxyl-Gruppen aufweisenden Kationenaustauscher, ferner die Aminocarbonsäuregruppen aufweisenden, Chelatkomplexe bildenden schwachsauren Kationenaustauscher zu verstehen. Diese schwachbasischen Anionenaustauscher und schwachsauren Kationenaustauscher und ihre Herstellung sind z. B. in F. Helfferich, 1. c., Seiten 26 bis 71 und Ullmanns Enzyklopädie der technischen Chemie, 4. Auflage, Band 13, 1977, Seiten 295-309 beschrieben.

Insbesondere kommen auch schwachbasische Anionenaustauscher und schwachsaure Kationenaustauscher in Betracht, die für das sogenannte Sirotherm-Verfahren eingesetzt werden können. Die Auswahlkritierien und die Herstellung dieser Ionenaustauscher sind z. B. beschrieben in : Aust. J. Chem. 19 (1966) Seiten 561-587, 589-608, 765-789 ; sowie in US-A-36 45 922, 38 88 928, 36 19 394.

Besonders bewährt haben sich die schwachbasischen Anionenaustauscher auf Grundlage vernetzter Polyacrylamide und vernetzter Polyvinylbenzylamine und die schwachsauren Kationenaustauscher auf Grundlage vernetzter Poly(meth)acrylsäure.

Die erfindungsgemäßen Düngemittel können alle essentiellen Makro- und Mikronährstoffe enthalten, wobei anionische Nährstoffe, wie Nitrat, Phosphat, Sulfat, Molybdat und Borat an Anionenaustauscher und kationische Nährstoffe, wie Kalium, Ammonium, Calcium und Magnesium an Kationenaustauscher gebunden sind. Mikronährstoffe wie Eisen, Mangan, Kupfer, Chrom, Kobalt und Zink sind als anionische Chelatkomplexe an schwachbasische Anionenaustauscher gebunden. Bevorzugt enthalten die erfindungsgemäßen Düngemittel die für eine gesunde Pflanzenentwicklung besonders wichtigen Makronährstoffe Stickstoff, Phosphor und Kalium, sowie die Mikronährstoffe Bor als Borat, Molybdän als Molybdat und Eisen, Kupfer, Mangan und Zink als anionische Chelatkomplexe. Mit solchen anionischen Chelatkomplexen beladene schwachbasische Anionenaustauscher sind z. B. in der US-A-3,980,462 beschrieben. Stickstoff kann dabei als Nitrat- und Ammoniumstickstoff im Molverhältnis 90 : 10 bis 50 : 50 enthalten sein und Phosphor als Dihydrogenphosphat oder Hydrogenphosphat.

Die in den erfindungsgemäßen Düngemitteln angewendeten Mengenverhältnisse der einzelnen Nährstoffe können in weiten Grenzen schwanken und werden vorteilhaft den speziellen Nährstoffbedürfnissen der verschiedenen Pflanzenarten angepaßt. Besonders geeignete Mengenverhältnisse sind in der Literatur beschrieben (s. US-A-3 082 074 ; DE-C-2 338 182 ; E. J. Hewitt : Sand and Water Culture method used in the study of plant nutrition, Commonwealth Agricultural Bureaux, Technical Communication N° 22, 2nd Edition, 1966, Seite 61 u. f.).

Die erfindungsgemäß erforderliche hohe Beladung der schwachsauren und schwachbasischen Ionenaustauscher mit den Nährstoffionen kann in verschiedener Weise erfolgen : So kann man die schwachsauren Kationenaustauscher beladen, indem man sie in der $H^+$-Form mit einer etwa 10 %igen wäßrigen Lösung der das gewünschte Kation enthaltenden freien Base, z. B. der wäßrigen Lösung von Kalium- oder Ammoniumhydroxid, Calcium- oder Magnesiumoxid, bis zum Einstellen des Gleichgewichts verrührt. Die schwachbasischen Anionenaustauscher werden vorteilhaft in der $OH^\ominus$-Form zunächst mit einer 0,1-5 %igen wäßrigen Lösung der anionischen Chelatkomplexe der Mikronährstoffkationen, anschließend mit einer 0,01-1 %igen wäßrigen Lösung, die Mikronährstoffanionen enthält, und schließlich mit einer etwa 10 %igen Lösung der das gewünschte Makronährstoffanion enthaltenden freien Säure, z. B. Salpetersäure, Schwefelsäure oder Phosphorsäure bzw. einem Gemisch dieser Säuren bis zur Einstellung des Gleichgewichtes behandelt. Weiter ist es möglich, die schwachbasischen Anionenaustauscher in der $OH^\ominus$-Form zunächst mit einer 0,1 bis 5 %igen wäßrigen Lösung eines Chelatbildners, der in Form der freien Säure vorliegt, zu verrühren, und anschließend zu diesem Gemisch eine 0,1 bis 5 %ige wäßrige Lösung eines oder mehrerer Salze von Mikronährstoffkationen hinzuzufügen. Nach der Gleichgewichtseinstellung wird der so mit den anionischen Chelatkomplexen beladene Anionenaustauscher, wie oben angegeben, weiter mit Mikronährstoffanionen und Makronährstoffanionen beladen.

Durch Zusatz einer geringen Menge eines Salzes, z. B. Kaliumnitrat, läßt sich die Beladungsgeschwindigkeit erhöhen. Anschließend an die Beladung werden die Ionenaustauscher von der wäßrigen Lösung durch Absaugen oder Schleudern abgetrennt und einzeln getrocknet. Die beladenen Ionenaustauscher können einzeln in Kombination oder als Mischung eingesetzt werden.

Die Beladung der schwachsauren und schwachbasischen Ionenaustauscher kann jedoch auch gleichzeitig vorgenommen werden, indem man das Gemisch aus dem schwachbasischen Anionenaustauscher in der $OH^-$-Form und dem schwachsauren Kationenaustauscher in der $H^+$-Form in einer 0,5 bis 3 molaren Düngesalzlösung mit einem Gehalt an anionischen Chelatkomplexen von Mikronährstoffkationen von 0,01 bis 1 mol/l bei Temperaturen von 0 bis 70 °C, vorzugsweise 5 bis 25 °C, unter Rühren belädt. Unter Umständen kann es auch vorteilhaft sein, das Ionenaustauschergemisch zunächst mit der wäßrigen Lösung der anionischen Chelatkomplexe der Mikronährstoffkationen zu verrühren, bis diese auf den Anionenaustauscher aufgezogen sind, und dann durch Zugabe weiterer Düngesalze die Beladung fortzusetzen. Sofern in dem Ionenaustauschergemisch ein Überschuß an schwachbasischen bzw. an schwachsauren Gruppen enthalten ist, wird dieser Überschuß vor oder nach der Beladung mit Düngesalzen durch Zugabe von Säure z. B. Salpetersäure bzw. Base z. B. Kaliumhydroxid abgesättigt.

Anschließend wird das Ionenaustauschergemisch wiederum durch Absaugen oder Abschleudern isoliert. Während nach diesem Verfahren eine Mischung der nährstoffbeladenen, feuchten Ionenaustauschharze anfällt, die im Bedarfsfall auch getrocknet werden kann, werden nach dem ersteren Verfahren die Einzelkomponenten erhalten, die in Kombination einzeln oder als Mischung eingesetzt werden können.

Die erfindungsgemäßen Kombinationen aus hochbeladenen schwachbasischen Anionenaustauschern und schwachsauren Kationenaustauschern können gemeinsam mit starkbasischen, mit Nährstoffionen beladenen Anionenaustauschern und/oder starksauren, mit Nährstoffkationen beladenen Kationenaustauschern angewendet werden, ohne daß durch diese zusätzlichen Komponenten die Eigenschaft der Kombinationen aus hochbeladenen schwachbasischen Anionenaustauschern und schwachsauren Kationenaustauschern, mit abnehmendem Salzgehalt des umgebenden wäßrigen Mediums verstärkt Nährsalze abzugeben, beeinträchtigt wird. Die zusätzlich verwendbaren starksauren Kationenaustauscher können mit kationischen Nährstoffen wie Kalium, Ammonium, Calcium oder Magnesium beladen sein, die stark basischen Anionenaustauscher mit anionischen Nährstoffen wie Nitrat, Phosphat, Sulfat, Borat oder Molybdat.

Das Mengenverhältnis zwischen starken und schwachen Ionenaustauschern kann in weiten Grenzen schwanken. Der Anteil der starksauren Kationenaustauscher am Gesamtkationenaustauschvermögen kann bis zu 80 %, vorzugsweise bis zu 50 %, betragen. Der Anteil der starkbasischen Anionenaustauscher am Gesamtanionenaustauschvermögen kann ebenfalls bis zu 80 %, vorzugsweise bis zu 50 %, betragen.

Bei Verwendung von Anionenaustauschern, die neben schwachbasischen auch starkbasische Gruppen enthalten, oder Kationenaustauschern, die neben schwachsauren auch starksaure Gruppen enthalten, gilt für die Anteile an starkbasischen bzw. starksauren Gruppen sinngemäß dasselbe. Von besonderem Interesse sind Zusätze üblicher, nährstoffbeladener starksaurer Kationenaustauscher.

Das erfindungsgemäße Verfahren bzw. die erfindungsgemäßen Düngemittel werden mit besonderem Vorteil in der Hydrokultur angewendet, insbesondere dann, wenn Gießwässer mit einem geringen Salzgehalt verwendet werden und der Ionenaustauscherdünger in auswechselbaren Nährstoffbatterien, zur Anwendung kommt, die einen durch Loch- oder Schlitzplatten, Vliese oder Folien verengten Diffusionsquerschnitt für die Nährstoffe an den Austrittsöffnungen aufweisen. Das erfindungsgemäße Verfahren gewährleistet auch unter extremen Anwendungsbedingungen eine gute Nährstoffversorgung der Pflanzen über einen langen Zeitraum.

Die erfindungsgemäße gemeinsame Verwendung der hochbeladenen schwachbasischen und schwachsauren Ionenaustauscher kann in unterschiedlicher Weise vorgenommen werden. So ist es z. B. möglich, die beiden Komponenten für sich in getrennten Kammern einer Zweikammer-Batterie unterzubringen oder in zwei einzelnen Batterien ; sie können aber auch nach Vermischen zusammen in einer Batterie mit nur einer Kammer untergebracht werden.

Das erfindungsgemäße Verfahren bzw. die erfindungsgemäßen Düngemittel können aber auch in den unterschiedlichsten natürlichen und synthetischen Substraten, in denen Pflanzen wachsen, angewendet werden.

Dabei erfolgt die Anwendung nach den in der Landwirtschaft und im Gartenbau üblichen Methoden : Beispielsweise lassen sich die Komponenten der erfindungsgemäßen Düngemittel in Kombination einzeln oder als Mischung mit dem natürlichen oder synthetischen Substrat vermengen oder durch Umgraben oder Pflügen in den Boden einarbeiten. Sie können ferner als Kopfdünger auf die Pflanzen oder deren Lebensraum verstreut werden.

Die erfindungsgemäßen Düngemittel können entweder als solche oder gegebenenfalls im Gemisch mit anderen Düngemitteln, Streckmitteln, Pflanzenschutzmitteln und/oder Wachstumsregulatoren verwendet werden.

Die erfindungsgemäßen Düngemittel können in Form von feinen Perlen, größeren Kugeln, als Granulat, als Pulver, in stückiger Form oder als Formkörper vorliegen.

Die nach dem erfindungsgemäßen Verfahren bei gemeinsamer Verwendung hochbeladener schwachbasischer und schwachsaurer Ionenaustauscher eingesetzten Mengen und die von den erfindungsgemäßen, nährstoffbeladenen Ionenaustauscher-Mischungen eingesetzten Mengen können in größeren Bereichen schwanken. Sie hängen im wesentlichen vom jeweiligen Nährstoffbedarf der Pflanzen ab. Im allgemeinen liegen die Aufwandmengen zwischen 0,001 und 0,1 l Ionenaustauscher pro l Kulturmedium, vorzugsweise zwischen 0,002 und 0,05 l pro l Kulturmedium.

Das erfindungsgemäße Verfahren bzw. die erfindungsgemäßen Düngemittel eignen sich zur langfristigen und gleichmäßigen Versorgung von Nutzpflanzen und Zierpflanzen. Zu den Nutzpflanzen zählen z. B Küchenkräuter wie Petersilie (Petroselinum sativum), Schnittlauch (Allium schoenoprasum), Majoran (Origanum majorana), Gemüsearten wie Salat (Lactuca sativa), Radieschen (Raphanus sativus), Gurken (Cucumis sativus), Tomaten (Solanum lycopersicum) ; Beerenobst wie Erdbeeren (Fragaria speciosa), Johannisbeeren (Ribes rubrum petracum), Stachelbeeren (Ribes grossularia), Wein (Vitis vinifera) ; Ananas (Ananas sativus) ; Citrus in Sorten ; Kirsche (Prunus) ; Pfirsich (Prunus persica).

Als Zierpflanzen seien beispielsweise genannt :

Aechmea (Aechmea fasciata), Efeu (Hedera helix), Croton (Codiaeum variegatum), Palme (Chamaedorea elegans), Philodendron (Philodendron red emerald ; Philodendron scandens ; Monstera deliclosa), Euphorbien (Euphorbia pulcherrima), Farne (Adiantum scutum roseum), Gummibaum (Ficus elastica Decora, Ficus robusta, Ficus diversifolia, Ficus benjamina), Aphelandra (Aphelandra squarrosa dania), Maranta (Maranta makoyana), Chrysanthemen (Yellow Delaware), Anthurien (Anthurium scherzerianum), Ericaceaen (Erica gracilis), Azaleen (Rhododendron simsii), Dieffenbachien (Dieffenbachia amoena ; Tropic white), Dracaenen (Dracaena terminalis, Dracaena deremensis), Hibiscus (Hibiscus rosasinensis), Frauenschuh (Cypripedium), Guzmanie (Guzmania minor), Pachystachys (Pachystachys), Peperonia (Peperonia glabella), Geweihfarn (Platycerium alcicorne), Scindapsus (Scindapsus aureus), Spatiphyllum (Spatiphyllum wallisii) und Vriesea (Vriesea splendens).

Der in den nachfolgenden Beispielen angegebene Beladungsgrad (in %) bezieht sich auf die Totalkapazität des betreffenden Ionenaustauschharzes.

## Beispiel 1

Zur Herstellung eines Stickstoff, Schwefel und Eisen enthaltenden Ionenaustauscher-Düngemittels werden je 500 ml der nachstehend beschriebenen, nährstoffbeladenen Ionenaustauschharze A und B gemischt.

Der Nährstoffgehalt der Mischung beträgt :

| | |
|---|---|
| Stickstoff | 19,5 mg/ml |
| davon Nitratstickstoff | 6 mg/ml |
| Schwefel | 3 mg/ml |
| Eisen | 5 mg/ml |

Der Gehalt an schwachsauren Gruppen, bezogen auf die Gesamtmenge an schwachsauren und schwachbasischen Gruppen beträgt 52 %.

Die verwendeten, nährstoffbeladenen Ionenaustauscherharze A und B wurden wie folgt erhalten :

## Harz A

500 ml eines schwachbasischen Anionenaustauschers in der freien Basenform (Gehalt an schwachbasischen Gruppen : 2,34 mol/l), hergestellt durch Aminomethylierung eines mit 8 % Divinylbenzol vernetzten und durch Zusatz von 60 % (bezogen auf das Monomerengemisch) eines $C_{12}$-Kohlenwasserstoffgemisches makroporös gemachten Styrolperlpolymerisates, wurden in 1 000 ml vollentsalztem Wasser suspendiert und unter Rühren bei 20 bis 25 °C nacheinander mit 125 mmol Ethylendiamintetraessigsäure, 125 mmol Eisen-II-sulfat und anschließend portionsweise mit soviel 1,5 N Salpetersäure versetzt, bis sich in der wäßrigen Phase ein konstanter pH-Wert von 4,3 eingestellt hatte. Der Salpetersäureverbrauch betrug 360 ml. Das so beladene Anionenaustauschharz wurde abgesaugt. Ausbeute 640 ml.

| | |
|---|---:|
| Gehalt an Nitratstickstoff | 12 mg/ml |
| Beladungsgrad | 47 % |
| Gehalt an Eisen | 10 mg/ml |
| Beladungsgrad | etwa 10 % |
| Gehalt an Schwefel | 6 mg/ml |
| Beladungsgrad | 21 % |

## Harz B

500 ml eines schwachsauren Kationenaustauschers in der Säureform (Gehalt an schwachsauren Gruppen : 3,2 Mol/l), hergestellt durch alkalische Verseifung eines mit 5 % Divinylbenzol vernetzten und durch Zusatz von 30 % Isooctan (bezogen auf das Monomerengemisch) makroporös gemachten Methacrylsäuremethylesterperlpolymerisates, wurden in einer Lösung von 5 g Ammoniumchlorid in 1 000 ml vollentsalztem Wasser suspendiert und unter Rühren bei 20 bis 25 °C innerhalb von 2 Stunden mit 375 ml etwa 10 %iger Ammoniaklösung versetzt. Nach 16-stündigem Rühren hatte sich in der wäßrigen Phase ein pH-Wert von 9,9 eingestellt. Anschließend wurde das beladene Kationenaustauschharz von der wäßrigen Phase abgetrennt. Ausbeute 810 ml, Gehalt an Ammoniumstickstoff 27 mg/ml ; Beladungsgrad 98 %.

## Beispiel 2

Zur Herstellung eines Ionenaustauscher-Düngemittels mit den Hauptnährstoffen Stickstoff, Phosphor und Kalium und den Mikronährstoffen Eisen und Mangan werden die nachstehend beschriebenen nährstoffbeladenen Austauschharze A, B, C, D und E in der in der folgenden Tabelle angegebenen Menge gemischt. Es wird ein Düngemittel erhalten, dessen Nährstoffgehalt ebenfalls aus der Tabelle zu ersehen ist.

(Siehe Tabelle Seite 7 f.)

6

Tabelle

| Harz | Menge g | Menge der ionenaustauschenden Gruppen (mmol/100 g Mischung) | | | | Nährstoff | Nährstoffgehalt g/100 g Mischung |
| --- | --- | --- | --- | --- | --- | --- | --- |
| | | schwach-basisch | stark-basisch | schwach-sauer | stark-sauer | | |
| A | 89 | 330 | – | – | – | Nitratstickstoff<br>Eisen | 2,9<br>0,6 |
| B | 16 | 41 | 8 | – | – | Phosphor<br>Mangan | 0,7<br>0,1 |
| C | 8 | – | – | 60 | – | Kalium | 1,5 |
| D | 10 | – | – | 87 | – | Ammoniumstickstoff | 0,7 |
| E | 16 | – | – | – | 56 | Kalium | 1,5 |

Der Gehalt der Mischung beträgt :

an schwachsauren Gruppen 28 %,
bezogen auf die Gesamtmenge an schwachsauren und schwachbasischen Gruppen ;
an starksauren Gruppen 28 %,
bezogen auf die Gesamtmenge an sauren Gruppen ;
an starkbasischen Gruppen 2 %,
bezogen auf die Gesamtmenge an basischen Gruppen.

Die verwendeten nährstoffbeladenen Ionenaustauschharze A bis E wurden wie folgt erhalten :

### Harz A

500 ml eines schwachbasischen Anionenaustauschers in der freien Basenform (Gehalt an schwach-basischen Gruppen : 3 mol/l), hergestellt durch Aminomethylierung eines mit 4 % Divinylbenzol ver-netzten Styrolperlpolymerisates, wurden in 500 ml vollentsalztem Wasser suspendiert und unter Rühren bei 20 bis 25 °C mit 93 ml Salpetersäure (etwa 65 %ig) und mit 225 mmol des Eisen-(III)-Chelatkomplexes der Ethylendiamin-tetraessigsäure versetzt. Nach der Gleichgewichtseinstellung betrug der pH-Wert in der wäßrigen Phase 4,5. Das so beladene Anionenaustauschharz wurde durch Absaugen von der wäßrigen Lösung abgetrennt und 20 Stunden bei Raumtemperatur an der Luft getrocknet. Ausbeute 404 g eines rieselfähigen Produktes.

| | |
|---|---:|
| Gehalt an Nitratstickstoff | 45 mg/g |
| Beladungsgrad | 87 % |
| Gehalt an Eisen | 9 mg/g |
| Beladungsgrad | etwa 5 % |
| Wassergehalt | 20 Gew.-% |

### Harz B

500 ml eines mittelbasischen Anionenaustauschers in der $OH^-$-Form (Gehalt an schwachbasischen Gruppen : 1,27 mol/l, Gehalt an starkbasischen Gruppen : 0,25 mol/l), hergestellt durch Aminolyse eines mit 5 % Divinylbenzol und 3 % Octadien-1,7 vernetzten makroporösen Acrylsäuremethylesterperlpolymeri-sates mit N,N-Dimethylaminopropylamin und anschließende partielle Quaternierung mit Methylchlorid, wurden in 500 ml vollentsalztem Wasser suspendiert und unter Rühren bei 20 bis 25 °C mit 57 g Phosphorsäure (etwa 85 %ig) und 75 mmol des Mangan-(II)-Chelatkomplexes der Ethylendiamin-tetraessigsäure versetzt. Nach 16-stündigem Nachrühren betrug der pH-Wert in der wäßrigen Phase 4,6. Das so beladene Anionenaustauschharz wurde abgesaugt und 72 Stunden bei Raumtemperatur an der Luft getrocknet. Ausbeute 246 g rieselfähiges Produkt.

| | |
|---|---:|
| Gehalt an Phosphor | 62 mg/g |
| Beladungsgrad | etwa 90 % |
| Gehalt an Mangan | 9 mg/g |
| Beladungsgrad | etwa 6 % |
| Wassergehalt | 22 Gew.-% |

### Harz C

780 ml eines schwachsauren Kationenaustauschers in der Säureform (Gehalt an schwachsauren Gruppen : 4,6 mol/l), hergestellt durch saure Hydrolyse eines mit 7 % Divinylbenzol und 2 % Octadien-1,7 vernetzten Acrylnitrilperlpolymerisates wurden in 1 l 0,03 N Kaliumchloridlösung suspendiert und unter Rühren bei 20 bis 25 °C portionsweise mit 3,4 mol Kaliumhydroxid (in Form einer 5-molaren wäßrigen Lösung) versetzt. Nach 12-stündigem Nachrühren hatte sich in der wäßrigen Phase ein pH-Wert von 9 eingestellt. Das beladene Kationenaustauschharz wurde abgesaugt und im Vakuum (130 mbar) bei 70 °C partiell getrocknet. Ausbeute 475 g rieselfähiges Produkt.

| | |
|---|---:|
| Gehalt an Kalium | 267 mg/g |
| Beladungsgrad | 90 % |
| Wassergehalt | 5,9 Gew.-% |

### Harz D

750 ml des in Beispiel 2 für die Herstellung des Harzes C verwendeten schwachsauren Kationenaustauschers in der Säureform wurden in 1 l 0,05 N Ammoniumchloridlösung suspendiert und unter Rühren bei Zimmertemperatur innerhalb von 4 Stunden mit 270 ml wäßriger Ammoniaklösung (etwa 23 %ig) versetzt. Nach 12-stündigem Nachrühren hatte sich in der wäßrigen Phase ein pH-Wert von 9 eingestellt. Das so beladene Kationenaustauschharz wurde durch Absaugen isoliert und im Vakuum (130 mbar) bei 90 °C partiell getrocknet. Ausbeute 395 g rieselfähiges Produkt.

| | |
|---|---|
| Gehalt an Ammoniumstickstoff | 101 mg/g |
| Beladungsgrad | 83 % |
| Wassergehalt | 9,4 Gew.-% |

## Harz E

550 ml eines handelsüblichen starksauren Kationenaustauschers auf der Basis eines mit 8 % Divinylbenzol vernetzten Styrolperlpolymerisates in der Säureform (Gehalt an starksauren Gruppen : 2,1 mol/l) wurden im Filterrohr durch Überleiten einer 2,5 %igen Kaliumchloridlösung mit Kalium beladen, bis der Filterablauf säurefrei war. Dann wurde der Austauscher chloridfrei gewaschen und anschließend 24 Stunden bei Raumtemperatur an der Luft getrocknet. Ausbeute 345 g rieselfähiges Produkt.

| | |
|---|---|
| Gehalt an Kalium | 129 mg/g |
| Wassergehalt | 24 Gew.-% |

## Beispiel 3

Zur Herstellung eines Ionenaustauscher-Düngemittels mit den Hauptnährstoffen Stickstoff und Kalium und dem Mikronährstoff Eisen werden in eine Lösung von 1,5 mol Kaliumnitrat und 6 mmol des Eisen-(III)-Chelatkomplexes der Ethylendiamin-di-(o-hydroxyphenyl)-essigsäure in 500 ml vollentsalztem Wasser 50 ml des in Beispiel 2 zur Herstellung des Harzes A verwendeten schwachbasischen Anionenaustauschers (Gehalt an schwach basischen Gruppen : 150 mmol) und 33 ml des in Beispiel 2 zur Herstellung des Harzes C verwendeten schwachsauren Kationenaustauschers (Gehalt an schwachsauren Gruppen : 150 mmol) eingetragen. Die Suspension wurde bis zur vollständigen Beladung der Ionenaustauscher bei Zimmertemperatur gerührt. Nach 120-stündigem Rühren hatte sich in der wäßrigen Phase eine konstante spezifische Leitfähigkeit von 145 mS/cm (20 °C) und ein pH-Wert von 7,5 eingestellt. Die so beladene Ionenaustauschermischung wurde abgesaugt, mit Methanol gespült und anschließend bei 40 °C partiell getrocknet. Ausbeute : 62 g rieselfähiges Produkt.

| | |
|---|---|
| Gehalt an Nitratstickstoff | 33 mg/g |
| Beladungsgrad | 97 % |
| Gehalt an Eisen | 4 mg/g |
| Beladungsgrad | 3 % |
| Gehalt an Kalium | 93 mg/g |
| Beladungsgrad | 98 % |
| Wassergehalt | 6 Gew.-% |

## Beispiel 4

Zur Herstellung eines Ionenaustauscher-Düngemittels mit den Hauptnährstoffen Stickstoff, Phosphor, Kalium und Schwefel und den Mikronährstoffen, Bor, Eisen, Kupfer, Mangan, Molybdän und Zink, das als Volldünger für die Hydrokultur von Pflanzen unter Verwendung salzarmer Gießwässer besonders geeignet ist, ist, werden 490 ml des nachstehend beschriebenen, mit Nitrat, Phosphat, Sulfat und den Mikronährstoffen beladenen, feuchten, schwachbasischen Anionenaustauschers A und 150 ml des nachstehend beschriebenen, mit Kalium und Ammonium beladenen schwachsauren Kationenaustauschers B gemischt und im Rotationsverdampfer im Vakuum (24 mbar) bei 60 °C partiell getrocknet. Ausbeute 315 g rieselfähiges Produkt.

| | |
|---|---|
| Wassergehalt | 7 Gew.-% |

Der Nährstoffgehalt des Düngemittels beträgt je 100 g Mischung :

| | |
|---|---|
| Nitratstickstoff | 3,5 g |
| Ammoniumstickstoff | 0,7 g |
| Phosphor | 0,8 g |
| Kalium | 3,0 g |
| Bor | 2 mg |
| Eisen | 102 mg |
| Kupfer | 1 mg |

| Mangan | 7 mg |
| Molybdän | 7 mg |
| Zink | 1 mg |
| Schwefel | 1 mg |
| schwachbasische Gruppen | 324 mmol |
| schwachsaure Gruppen | 135 mmol |

(= 29 % bezogen auf den Gesamtgehalt des Düngemittels in schwachbasischen und schwachsauren Gruppen).

Die verwendeten nährstoffbeladenen Harze A und B wurden wie folgt erhalten:

## Harz A

1 000 ml des in Beispiel 2 zur Herstellung des Harzes A verwendeten schwach basischen Anionenaustauschers in der freien Basenform wurden in 1 000 ml vollentsalztem Wasser suspendiert und unter Rühren bei Zimmertemperatur innerhalb von 3 Stunden nacheinander mit

5,96 g Ethylendiamin-tetraessigsäure,
27 g Phosphorsäure (etwa 85 %ig),
0,57 g $Na_2B_4O_7 \cdot 10\,H_2O$,
0,11 g $(NH_4)_6\,Mo_7O_{24} \cdot 4\,H_2O$,
5 g $FeSO_4 \cdot 7\,H_2O$,
0,3 g $MnSO_4 \cdot H_2O$,
0,045 g $CuSO_4 \cdot 5\,H_2O$,
0,05 g $ZnSO_4 \cdot 7\,H_2O$,
250 g Salpetersäure (etwa 65 %ig)

versetzt.

Nach 20-stündigem Nachrühren betrug der pH-Wert in der wäßrigen Phase 4,5. Das so beladene Anionenaustauschharz wurde durch Absaugen von der wäßrigen Phase abgetrennt. Ausbeute 1 440 ml feuchtes Produkt.

| Gehalt an Nitratstickstoff | 22,6 mg/ml |
| Beladungsgrad | 78 % |
| Gehalt an Phosphor | 5,0 mg/ml |
| Beladungsgrad | etwa 12 % |
| Gehalt an Schwefel | 0,4 mg/ml |
| Beladungsgrad | etwa 1 % |
| Gehalt an anionisch chelatisierten Nährstoffkationen (Eisen, Kupfer, Mangan, Zink) insgesamt | 0,7 mg/ml |
| Beladungsgrad | etwa 0,7 % |
| Gehalt an Borat und Molybdat insgesamt | 0,06 mg/ml |
| Beladungsgrad | etwa 0,2 % |

## Harz B

1 000 ml des in Beispiel 2 zur Herstellung des Harzes C verwendeten schwachsauren Kationenaustauschers in der Säureform wurden in einer Lösung von 3,75 g Kaliumchlorid in 1 l vollentsalztem Wasser suspendiert und unter Rühren und Kühlen bei 20 bis 25 °C innerhalb von 25 Minuten 183 g Kaliumhydroxid (in Form einer 84 %igen wäßrigen Lösung) versetzt. Nach 3-stündigem Nachrühren hatte sich in der wäßrigen Phase ein pH-Wert von 7,3 eingestellt. Anschließend wurden innerhalb von 2,75 Stunden bei der selben Temperatur 135 ml wäßrige Ammoniaklösung (etwa 25 %ig) zugetropft. Dabei stieg der pH-Wert auf 9,4 an. Nach 16-stündigem Nachrühren betrug der pH-Wert 9,2. Das so beladene schwachsaure Kationenaustauschharz wurde abgesaugt. Ausbeute 1 620 ml feuchtes Kationenaustauschharz.

| Gehalt an Kalium | 64 mg/ml |
| Beladungsgrad | 58 % |
| Gehalt an Ammoniumstickstoff | 15 mg/ml |
| Beladungsgrad | 38 % |

## Beispiel 5 (Vergleichsbeispiel)

Zur Herstellung eines Ionenaustauscher-Düngemittels mit den Hauptnährstoffen Stickstoff, Phosphor, Kalium und Schwefel sowie den Mikronährstoffen Bor, Eisen, Kupfer, Mangan, Molybdän und Zink unter Verwendung eines schwachbasischen und eines starksauren Ionenaustauschers wird zunächst das in Beispiel 4 verwendete Harz A wie beschrieben beladen. Das Harz wird jedoch von der wäßrigen Phase nicht abgetrennt, sondern anschließend an die Beladung werden in die Suspension des mit Nitrat, Phosphat, Sulfat und den Mikronährstoffen beladenen schwachbasischen Anionenaustauschers unter Rühren bei Zimmertemperatur nacheinander innerhalb von 2 Stunden eingetragen :

570 ml des in Beispiel 2 zur Herstellung des Harzes E verwendeten starksauren Kationenaustauschers,

51,5 g Kaliumhydroxid (85 %ig) und 35 g Ammoniaklösung (etwa 25 %ig).

Nach 16-stündigem Nachrühren betrug der pH-Wert in der wäßrigen Phase 4, 6. Das mit Nährstoffen beladene Ionenaustauschergemisch wurde von der wäßrigen Phase abgetrennt und 24 Stunden im Vakuum (120 mbar) bei 90 °C partiell getrocknet.

Ausbeute 1 040 g rieselfähiges Produkt.

| | |
|---|---|
| Wassergehalt | 6 Gew.-%. |

Nährstoffgehalt der Düngemittelmischung je 100 g Mischung

| | |
|---|---|
| Nitratstickstoff | 3,2 g |
| Ammoniumstickstoff | 0,6 g |
| Phosphor | 0,7 g |
| Kalium | 2,8 g |
| Bor | 2 mg |
| Eisen | 91 mg |
| Kupfer | 1 mg |
| Mangan | 6 mg |
| Molybdän | 7 mg |
| Zink | 1 mg |
| Schwefel | 1 mg |
| schwachbasische Gruppen | 288 mmol |
| starksaure Gruppen | 121 mmol |

## Beispiel 6

Düngungsversuche bei Zierpflanzen in Hydrokultur.

Mit dem erfindungsgemäßen Düngemittel gemäß Beispiel 4 und dem Düngemittel gemäß Beispiel 5 (Vergleichsbeispiel) wurden vergleichende Düngungsversuche bei Zierpflanzen in Hydrokultur durchgeführt. Dabei wurden die Düngemittel in handelsüblichen Nährstoff-Batterien in Kästchenform (vgl. M. Schubert, I. c., Abb. auf Seite 94) angewendet, die einen verengten Diffusionsquerschnitt haben (Abmessungen der Batterien aus Kunststoff : 45 × 45 × 20 mm ; Deckel und Boden mit je 13 Schlitzreihen ; Schlitzweite : 0,05 bis 0,3 mm ; gesamte Schlitzlänge pro Reihe : 28 mm).

Die pro Batterie eingesetzten Düngemittelmengen und die darin enthaltenen Nährstoffmengen sind in Tabelle 1 aufgeführt.

# 0 041 169

Tabelle 1

Düngemittelmengen pro Batterie

|  | Düngemittel gemäß Beispiel 4 | Düngemittel gemäß Beispiel 5 (Vergleichsbeispiel) |
|---|---|---|
| Menge (g) | 9 | 10 |
| Nitratstickstoff (mg) | 315 | 320 |
| Ammoniumstickstoff (mg) | 63 | 60 |
| Phosphor (mg) | 72 | 70 |
| Kalium (mg) | 270 | 280 |
| Bor (mg) | 0,2 | 0,2 |
| Eisen (mg) | 9 | 9 |
| Kupfer (mg) | 0,1 | 0,1 |
| Mangan (mg) | 0,6 | 0,6 |
| Molybdän (mg) | 0,6 | 0,7 |
| Zink (mg) | 0,1 | 0,1 |
| Schwefel (mg) | 0,1 | 0,1 |

Die Pflanzen wurden in handelsüblichen Einzelgefäßen mit Wasserreservoir kultiviert, bei denen die Nährstoff-Batterie unter dem Boden des Pflanztopfes (Kulturtopfes) angebracht ist. Dadurch ergeben sich relativ lange Diffusionswege für die Nährstoffe. Als Pflanzsubstrat diente Blähton. Als Gießwasser wurde salzarmes Trinkwasser mit einer spezifischen Leitfähigkeit von 100 µS/cm bei 20 °C verwendet.

Die Versuche wurden mit 4 Zierpflanzenarten durchgeführt ;

Ficus benjamina, Rhaphidophora aurea, Dieffenbachia amoena « Tropic White », Dracaena massangeana.

Je Versuchsvariante wurden 4 Pflanzen eingesetzt. Sobald die Düngewirkung der Düngemittel erschöpft war, wurden die alten Batterien durch neue ersetzt. Die gesamte Versuchsdauer (Kulturzeit) betrug bei Anwendung von 2 Nährstoff-Batterien je Pflanze je nach Pflanzenart unterschiedlich 229 bis 345 Tage, vgl. Tabelle 2.

Bei Versuchsende wurden die Pflanzen nach allgemeinen gärtnerischen Gesichtspunkten — wie Qualität, Blattfarbe und Habitus — begutachtet und der Zuwachs festgestellt (Endgewicht minus Anfangsgewicht). Bei Rhaphidophora ergibt sich der Zuwachs aus dem Gewicht der abgeschnittenen Ranken. Bei Dieffenbachia und Dracaena wurden darüber hinaus die Blattlänge bzw. die Anzahl der Blätter ermittelt, bei Rhaphidophora die Anzahl der neuen Triebe. In Tabelle 2 sind die Meßergebnisse als Mittelwerte für jede Pflanzenart angegeben.

(Siehe Tabelle 2 Seite 13 f.)

# 0 041 169

Tabelle 2

Pflanzenwachstum und Pflanzenbonitierung

| Pflanzenart Wachstumsgröße | Kulturzeit $\int$ Tage $\int$ | Wachstumswert bzw. Düngemittel gemäß Beispiel 4 | Bonitierungswert [1] Düngemittel gemäß Beispiel 5 (Vergleichsbeispiel) |
|---|---|---|---|
| Ficus benjamina | 229 | | |
| Bonitierung | | 2,5 | 3,5 |
| Zuwachs: g | | 176 | 142 |
| % | | 124 | 100 |
| Rhaphidophora | 266 | | |
| Bonitierung | | 2 | 4 |
| Ranken: g | | 109 | 86 |
| % | | 127 | 100 |
| Anzahl Triebe | | 6,75 | 5,25 |
| Dieffenbachia | 288 | | |
| Bonitierung | | 2 | 3 |
| Zuwachs: g | | 230 | 170 |
| % | | 135 | 100 |
| Blattlänge: cm | | 29,0 | 26,2 |
| % | | 110 | 100 |
| Dracaena | 345 | | |
| Bonitierung | | 2 | 3,5 |
| Zuwachs: g | | 104 | 72 |
| % | | 144 | 100 |
| Anzahl Blätter | | 15 | 11 |

1) Bonitierungswerte 1 bis 5 ; Wert = 1 entspricht sehr guter Pflanzenqualität

Aus Tabelle 2 geht hervor, daß bei Anwendung des erfindungsgemäßen Düngemittels gemäß Beispiel 4 für alle Pflanzenarten am Ende der Kulturzeit durchschnittliche Bonitierungswerte von etwa 2 gefunden wurden. Dies entspricht einer guten Pflanzenqualität. Demgegenüber wurden alle Pflanzen aus den Vergleichsversuchen mit dem Düngemittel gemäß Beispiel 5 (Vergleichsbeispiel) um 1 bis 2 Punkte schlechter bonitiert. Weiter ist aus Tabelle 2 ersichtlich, daß die mit dem erfindungsgemäßen Düngemittel versorgten Pflanzen ein deutlich besseres Wachstum zeigten. Setzt man den für den Zuwachs gefundenen Wert bei den mit dem Düngemittel gemäß Beispiel 5 (Vergleichsbeispiel) versorgten Pflanzen jeweils gleich 100 %, so ergeben sich im Vergleich hierzu bei Ficus benjamina 124 %, bei Rhaphidophora 127 %, bei Dieffenbachia amoena 135 % und bei Dracaena massangeana 144 % für die mit dem erfindungsgemäßen Düngemittel versorgten Pflanzen. Das bessere Wachstum mit dem erfindungsgemäßen Düngemittel läßt sich außerdem bei Rhaphidophora an der vermehrten Anzahl der Triebe, bei Dieffenbachia an den größeren Blättern (Blattlänge) und bei Dracaena massangeana an der höheren Blattanzahl ablesen.

Vergleichbare Versuchsergebnisse wurden erhalten, wenn Harz A und Harz B aus Beispiel 4, statt in einer 1-Kammer-Nährstoff-Batterie, getrennt von einander in einer 2-Kammer-Batterie eingesetzt oder jedes Harz für sich in einen Vliesbeutel gefüllt und die Vliesbeutel in die wässrige Phase eingehängt wurden.

Beispiel 7

Zur Herstellung eines Ionenaustauscher-Düngemittels mit den Hauptnährstoffen Stickstoff, Phosphor, Kalium und Calcium und den Mikronährstoffen Eisen und Mangan werden die in Beispiel 2 beschriebenen nährstoffbeladenen Austauschharze A, B und C und das nachstehend beschriebene Austauschharz D in der in der folgenden Tabelle angegebenen Menge gemischt. Es wird ein Düngemittel erhalten, dessen Nährstoffgehalt ebenfalls aus der Tabelle zu ersehen ist.

Tabelle

| Harz | Menge $\underline{\textit{g}}$ | Menge der ionenaustauschenden Gruppen $\underline{\textit{mmol/100 g Mischung}}$ | | | Nährstoff | Nährstoff- $\underline{\textit{g/100 g Mischung}}$ · |
|------|------|------|------|------|-----------|-------------|
| | | schwach-basisch | stark-ba-sisch | schwach-sauer | | |
| A | 44 | 163 | – | – | Nitrat-stickstoff<br>Eisen | 3,1<br>0,6 |
| B | 8 | 20 | 4 | – | Phosphor<br>Mangan | 0,8<br>0,1 |
| C | 8 | – | – | 60 | Kalium | 3,3 |
| D | 4 | – | – | 26 | Calcium | 0,8 |

Der Gehalt der Mischung beträgt 32 % an schwachsauren Gruppen (bez. auf die Gesamtmenge an schwachsauren und schwachbasischen Gruppen)

Harz D

420 ml des in Beispiel 2 für die Herstellung des Harzes C verwendeten schwachsauren Kationenaustauschers in der Säureform wurden in 300 ml Leitungswasser suspendiert und unter Rühren bei Zimmertemperatur mit 75 g technischem Calciumhydroxid (95 %ig) versetzt.

Nach 20-stündigem Nachrühren betrug der pH-Wert in der wäßrigen Phase 9,7. Das so beladene Kationenaustauschharz wurde in einer Filtersäule klargespült und anschließend durch Absaugen isoliert und 48 Stunden bei Raumtemperatur an der Luft getrocknet.

Ausbeute : 293 g rieselfähiges Produkt
Gehalt an Calcium : 125 mg/g
Beladungsgrad : 95 %
Wassergehalt : 23 %.

**Ansprüche**

1. Verfahren zur Verbesserung des Pflanzenwachstums mit Hilfe von Ionenaustauscher-Düngemitteln, dadurch gekennzeichnet, daß man in den Kulturmedien schwach basische Anionenaustauscher, die zu mindestens 60 % ihrer Totalkapazität mit anionischen Chelatkomplexen von Mikronährstoffkationen und Makro- und Mikronährstoffanionen beladen sind, gemeinsam mit schwachsauren, zu mindestens 60 % ihrer Totalkapazität beladenen Kationenaustauschern verwendet.

2. Verfahren gemäß Anspruch 1, dadurch gekennzeichnet, daß die schwachbasischen Anionenaustauscher und die schwachsauren Kationenaustauscher zu mindestens 80 % ihrer Totalkapazität mit Nährstoffionen beladen sind.

3. Verfahren gemäß Ansprüchen 1 und 2, dadurch gekennzeichnet, daß die hochbeladenen schwachbasischen und schwachsauren Ionenaustauscher in einem solchen Verhältnis eingesetzt werden, daß die Menge an schwachsauren Gruppen 10 bis 90 % bezogen auf die Summe aus schwachbasischen und schwachsauren Gruppen beträgt.

4. Düngemittel enthaltend Mischungen von mit anionischen Chelatkomplexen von Mikronährstoffkationen und weiteren Mikro- und Makronährstoffanionen beladenen, schwachbasischen Anionenaustauschern und mit Nährstoffkationen beladenen Kationenaustauschern, dadurch gekennzeichnet, daß sie Mischungen aus zu mindestens 60 % ihrer Totalkapazität mit anionischen Chelatkomplexen von Mikronährstoffkationen und weiteren Mikro- und Makronährstoffanionen beladenen schwachbasischen Anionenaustauschern und zu mindestens 60 % ihrer Totalkapazität mit Nährstoffkationen beladenen schwachsauren Kationenaustauscher enthalten.

5. Düngemittel gemäß Anspruch 4, dadurch gekennzeichnet, daß die schwachbasischen Anionenaustauscher und die schwachsauren Kationenaustauscher zu mindestens 80 % ihrer Totalkapazität mit Nährstoffionen beladen sind.

6. Düngemittel gemäß Ansprüchen 4 und 5, dadurch gekennzeichnet, daß in ihnen die Menge an schwachsauren Gruppen 10 bis 90 % bezogen auf die Summe aus schwachbasischen und schwachsauren Gruppen beträgt.

7. Düngemittel gemäß Ansprüchen 4 bis 6, dadurch gekennzeichnet, daß 0,25 bis 25 % der Totalkapazität der mit anionischen Chelatkomplexen von Mikronährstoffkationen und Mikro- und Makronährstoffanionen beladenen, schwachbasischen Anionenaustauscher durch die anionischen Chelatkomplexe abgesättigt sind.

8. Düngemittel gemäß Ansprüchen 4 bis 7, dadurch gekennzeichnet, daß sie zusätzlich zu den mit Nährstoffionen hochbeladenen schwachbasischen und schwachsauren Ionenaustauschern starkbasische und/oder starksaure, mit Nährstoffionen beladene, Ionenaustauscher enthalten.

9. Düngemittel gemäß Anspruch 8, dadurch gekennzeichnet, daß der Anteil der starkbasischen Gruppen am gesamten Anionenaustauschvermögen bis zu 80 % und/oder der Anteil der starksauren Gruppen an dem gesamten Kationenaustauschvermögen bis zu 80 % beträgt.

10. Düngemittel gemäß Ansprüchen 8 und 9, dadurch gekennzeichnet, daß der Anteil der starkbasischen Gruppen an dem gesamten Anionenaustauschvermögen bis zu 50 % und/oder der Anteil der starksauren Gruppen an dem gesamten Kationenaustauschvermögen bis zu 50 % beträgt.

### Claims

1. Process for improving plant growth with the aid of ion exchanger fertilisers, characterised in that weakly basic anion exchangers which are charged with anionic chelate complexes of micronutrient cations and macronutrient and micronutrient anions to the extent of at least 60 % of their total capacity are used in the culture media, together with weakly acid cation exchangers charged to the extent of at least 60 % of their total capacity.

2. Process according to Claim 1, characterised in that weakly basic anion exchangers and the weakly acid cation exchangers are charged with nutrient ions to the extent of at least 80 % of their total capacity.

3. Process according to Claims 1 and 2, characterised in that the highly charged weakly basic and weakly acid ion exchangers are employed in a ratio such that the amount of weakly acid groups is 10 to 90 %, relative to the sum of weakly basic groups and weakly acid groups.

4. Fertilisers consisting of mixtures of weakly basic anion exchangers charged with anionic chelate complexes of micronutrient cations and other micronutrient and macronutrient anions and cation exchangers charged with nutrient cations, characterised in that they contain mixtures of weakly basic anion exchangers charged with anionic chelate complexes of micronutrient cations and other micronutrient and macronutrient anions to the extent of at least 60 % of their total capacity and weakly acid cation exchangers charged with nutrient cations to the extent of at least 60 % of their total capacity.

5. Fertilisers according to Claim 4, characterised in that the weakly basic anion exchangers and the weakly acid cation exchangers are charged with nutrient ions to the extent of at least 80 % of their total capacity.

6. Fertilisers according to Claims 4 and 5, characterised in that the amount of weakly acid groups therein is 10 to 90 %, relative to the sum of weakly basic groups and weakly acid groups.

7. Fertilisers according to Claims 4 to 6, characterised in that 0.25 to 25 % of the total capacity of the weakly basic anion exchangers charged with anionic chelate complexes of micronutrient cations and micronutrient and macronutrient anions is taken up by the anionic chelate complexes.

8. Fertilisers according to Claims 4 to 7, characterised in that they contain strongly basic and/or strongly acid ion exchangers charged with nutrient ions, in addition to the weakly basic and weakly acid ion exchangers highly charged with nutrient ions.

9. Fertilisers according to Claim 8, characterised in that the strongly basic groups amount to up to 80 % of the total anion exchange capacity and/or the strongly acid groups amount to up to 80 % of the total cation exchange capacity.

10. Fertilisers according to Claims 8 and 9, characterised in that the strongly basic groups amount to up to 50 % of the total anion exchange capacity and/or the strongly acid groups amount to up to 50 % of the total cation exchange capacity.

### Revendications

1. Procédé pour l'amélioration de la croissance des plantes à l'aide d'engrais-échangeurs d'ions, caractérisé en ce que l'on utilise dans les milieux de culture des échangeurs d'anions faiblement basiques, qui sont chargés à au moins 60 % de leur capacité totale avec des chélates complexes anioniques de cations d'oligo-éléments et des anions d'éléments nutritifs majeurs et d'oligo-éléments, simultanément avec des échangeurs de cations faiblement acides, chargés à au moins 60 % de leur capacité totale.

2. Procédé selon la revendication 1, caractérisé en ce que les échangeurs d'anions faiblement basiques et les échangeurs de cations faiblement acides sont chargés en ions d'éléments nutritifs à au moins 80 % de leur capacité totale.

3. Procédé selon les revendications 1 et 2, caractérisé en ce que les échangeurs d'ions faiblement basiques et faiblement acides fortement chargés sont utilisés dans un rapport tel que la quantité de groupes faiblement acides est de 10 à 90 % par rapport à la somme des groupes faiblement basiques et faiblement acides.

4. Engrais contenant des mélanges d'échangeurs d'anions faiblement basiques chargés avec des chélates complexes anioniques de cations d'oligo-éléments et d'autres anions d'oligo-éléments et d'éléments majeurs nutritifs et d'échangeurs de cations chargés avec des cations d'éléments nutritifs, caractérisés en ce qu'ils contiennent des mélanges d'échangeurs d'anions faiblement basiques chargés avec des chélates complexes anioniques de cations d'oligo-éléments et d'autres anions d'oligo-éléments et d'éléments nutritifs majeurs à au moins 60 % de leur capacité totale et d'échangeurs de cations faiblement acides chargés en cations d'éléments nutritifs à au moins 60 % de leur capacité totale.

5. Engrais selon la revendication 4, caractérisés en ce que les échangeurs d'anions faiblement basiques et les échangeurs de cations faiblement acides sont chargés en ions d'éléments nutritifs à au moins 80 % de leur capacité totale.

6. Engrais selon les revendications 4 et 5, caractérisés en ce que la quantité de groupes faiblement acides dans ces engrais est de 10 à 90 % par rapport à la somme des groupes faiblement basiques et faiblement acides.

7. Engrais selon les revendications 4 à 6, caractérisés en ce que 0,25 à 25 % de la capacité totale des échangeurs d'anions faiblement basiques chargés avec des chélates complexes anioniques de cations d'oligo-éléments et des anions d'oligo-éléments et d'éléments nutritifs majeurs sont saturés par les chélates complexes anioniques.

8. Engrais selon les revendications 4 à 7, caractérisés en ce qu'ils contiennent des échangeurs d'anions fortement basiques et/ou fortement acides chargés en ions d'éléments nutritifs, en plus des échangeurs d'ions faiblement basiques et faiblement acides fortement chargés en ions d'éléments nutritifs.

9. Engrais selon la revendication 8, caractérisés en ce que la fraction des groupes fortement basiques atteint jusqu'à 80 % du pouvoir total d'échange d'anions et/ou la fraction des groupes fortement acides atteint jusqu'à 80 % du pouvoir total d'échange de cations.

10. Engrais selon les revendications 8 et 9, caractérisés en ce que la fraction des groupes basiques atteint jusqu'à 50 % du pouvoir total d'échange des anions et/ou la fraction des groupes fortement acides atteint jusqu'à 50 % du pouvoir total d'échange des cations.